(19) Europäisches Patentamt
European Patent Office
Office européen des brevets

(11) **EP 1 442 875 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
***B32B 27/36*** *(2006.01)* ***B32B 27/20*** *(2006.01)*

(21) Anmeldenummer: **04000707.2**

(22) Anmeldetag: **15.01.2004**

(54) **Einseitig matte, biaxial orientierte Polyesterfolie, Verfahren zu ihrer Herstellung und ihre Verwendung**

Biaxially oriented polyesterfoil exhibiting one matt side, its method of making and its use

Feuille en polyester biaxialement orientée présentant une surface mate, son procédé de fabrication et utilisation

(84) Benannte Vertragsstaaten:
**DE FR GB IT LU**

(30) Priorität: **28.01.2003 DE 10303144**

(43) Veröffentlichungstag der Anmeldung:
**04.08.2004 Patentblatt 2004/32**

(73) Patentinhaber: **Mitsubishi Polyester Film GmbH 65203 Wiesbaden (DE)**

(72) Erfinder:
• **Konrad, Matthias, Dr. 65719 Hofheim (DE)**
• **Pfeiffer, Herbert, Dr., Professor 55126 Mainz (DE)**
• **Hilkert, Gottfried, Dr. 55291 Saulheim (DE)**

(74) Vertreter: **Schweitzer, Klaus et al Zounek Plate Schweitzer Patentanwaltskanzlei Rheingaustrasse 196 65203 Wiesbaden (DE)**

(56) Entgegenhaltungen:
EP-A- 1 197 328 EP-A- 1 234 848

**Beschreibung**

Die Erfindung betrifft eine einseitig matte, koextrudierte, biaxial orientierte Polyesterfolie, bestehend aus mindestens einer Basisschicht (B) und mindestens einer auf dieser Basisschicht (B) aufgebrachten matten Deckschicht (A). Die Folie zeichnet sich durch eine charakteristische matte Oberfläche der Deckschicht (A) und eine geringe Trübung aus. Die Erfindung betrifft weiterhin ein Verfahren zur Herstellung der Folie und ihre Verwendung.

Die Verpackungsindustrie hat einen hohen Bedarf an transparenten, hochglänzenden Kunststofffolien wie z.B. biaxial orientierten Polypropylen- oder biaxial orientierten Polyesterfolien. Daneben besteht in zunehmendem Maße ein Bedarf an solchen transparenten Folien, bei denen zumindest eine Oberflächenschicht nicht hochglänzend ist, sondern sich durch ein charakteristisches mattes Erscheinungsbild auszeichnet und dadurch z.B. der Verpackung ein besonders attraktives und damit werbewirksames Aussehen verleiht.

Typische Anwendungen für Polyesterfolien mit mindestens einer matten Oberfläche sind Umverpackungen von Kaffee, Tee, Suppen oder von ausgewählten Drogerieartikeln. Die matte Seite der Folie bewirkt neben dem werbewirksamen Aussehen auch eine Entspiegelung der Oberfläche.

In der EP-A-0 347 646 wird eine biaxial orientierte Polyesterfolie beschrieben, die mindestens eine Deckschicht A aufweist, die einen Füllstoff in einer Konzentration von 0,5 bis 50 % enthält, wobei der Durchmesser dieses Füllstoffes in einem bestimmten Verhältnis zur Schichtdicke der Deckschicht A steht. Weiterhin weist die Deckschicht A eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über den erzielten Glanz der Deckschicht A gibt die Schrift keine Auskunft. Eine nach der EP-A-0 347 646 (Beispiel 1) hergestellte Folie hatte nicht die gewünschte matte Oberfläche.

In der EP-A-0 053 498 wird eine mehrschichtige, biaxial orientierte Polyesterfolie beschrieben, die eine transparente Basisschicht (B) und auf mindestens einer Seite dieser Schicht eine matt scheinende weitere Schicht (A) aufweist. Diese matt scheinende Schicht besteht im Wesentlichen aus einem Polyethylenterephthalat-Copolyester, der

$$H(-OCH_2CH_2-)_nOH$$

oder

$$H(-OCH_2-CH_2-)_{n-1}O-C_6H_4-O-(CH_2-CH_2O-)_{n-1}H$$

oder

$$H(-OCH_2-CH_2-)_{n-1}O-C_6H_4-X-C_6H_4-O-(CH_2-CH_2O-)_{n-1}H\text{-Einheiten}$$

(n ist eine ganze Zahl von 2 bis 140, X steht für $-CH_2-$, $-C(CH_3)_2-$ oder $-SO_2-$) und inerte anorganische Partikel mit einem mittleren Durchmesser von 0,3 bis 20 $\mu$m in einer Konzentration von 3 bis 40 % enthält, bezogen auf die matt scheinende Schicht. Die Folie zeichnet sich durch einen hohen Mattgrad (Glanz kleiner 15) und eine für gewisse Anwendungen noch akzeptable Transparenz (größer als 60 %) aus. Nachteilig an dieser Folie ist, dass sie im Fall einer ABA-Struktur nicht bedruckbar und im Fall einer AB-Struktur insbesondere nicht auf schnelllaufenden Maschinen zu verarbeiten ist. Außerdem ist sie für viele Anwendungen zu trüb und weist Mängel bei der Herstellung auf.

Ebenfalls bekannt sind nach dem Stand der Technik matte, milchig scheinende, biaxial orientierte Polyesterfolien.

In der DE-A-23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr erneut bei der Folienherstellung eingesetzt werden kann, da ansonsten die Folie gelb wird. Das Verfahren ist damit aber unwirtschaftlich, und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß mit hoher Opazität.

In der US-PS 3,154,461 wird eine biaxial orientierte Folie aus thermoplastischem Kunststoff (z.B. Polyethylenterephthalat, Polypropylen) mit matter Oberfläche beansprucht, die inkompressible Partikel (z.B. Calciumcarbonat, Siliciumdioxid) in einer Größe von 0,3 bis 20 $\mu$m und in einer Konzentration von 1 bis 25 % enthält. Für viele Anwendungen ist diese Folie aber zu trüb.

Die EP-A 1 197 328 beschreibt bereits eine mehrschichtige, biaxial orientierte Folie aus Polyester, die mindestens eine Basisschicht aus thermoplastischem Polyethylenterephthalat (= PET) und eine matte Deckschicht aus einer Mischung aus PET und einem Copolymer mit 65 bis 95 Mol-% Isophthalsäure umfasst. Diese bekannte Folie wird als Verpackungsmaterial für Nahrungsmittel verwendet und ist vorteilhaft auf schnell laufenden Verpackungsmaschinen einsetzbar. Die Deckschicht dieser bekannten Folie enthält aber neben Isophthalsäureeinheiten immer auch noch eine bestimmte Menge an Sulfomonomeren, die nachteiliger Weise zu einer rückläufigen Laufsicherheit der Folie nach dem Stand der Technick beim Herstellprozess im Betrieb geführt haben.

Aufgabe der vorliegenden Erfindung war es daher, eine mindestens einseitig matte, biaxial orientierte Polyesterfolie bereitzustellen, die die Nachteile der genannten Folien aus dem Stand der Technik nicht aufweist und sich insbesondere durch einen hohen Mattgrad bei gleichzeitig niedriger Trübung, insbesondere niedriger Volumentrübung, und guter Transparenz, eine sehr gute Herstellbarkeit und eine sehr gute Verarbeitbarkeit auszeichnet. Außerdem sollte dafür Sorge getragen werden, dass die Folie auch auf schnelllaufenden Verarbeitungsmaschinen verarbeitet werden kann. Bei der Herstellung der Folie sollte weiterhin gewährleistet sein, dass bei der Folienherstellung anfallendes Verschnittmaterial als Regenerat wieder dem Herstellprozess zurückgeführt werden kann, ohne dass dabei die physikalischen und optischen Eigenschaften der Folie nennenswert negativ beeinflusst werden.

Gelöst wird die Aufgabe durch eine biaxial orientierte Poylesterfolie, die mindestens eine Basisschicht (B) und mindestens eine matte Deckschicht (A) aufweist, wobei die Deckschicht (A) Partikel enthält, die bevorzugt einen mittleren Partikeldurchmesser $d_{50}$ von 2 bis 10 $\mu$m und eine SPAN98 von kleiner/gleich ($\leq$) 2 aufweisen, und wobei die Deckschicht (A) einen Polyester enthält, der 4 bis 30 Mol-% Isophthalsäureeinheiten aufweist und 70 bis 96 Mol-% Terephthalsäureeinheiten, bezogen auf die Gesamtsäuremenge des Polyesters in dieser Schicht.

Die matte Deckschicht (A) enthält die Partikel bevorzugt in einer Konzentration von 10.000 bis 70.000 ppm.

Erfindungsgemäß ist die Folie zumindest zweischichtig und umfasst dann als Schichten die Basisschicht (B) und die matte Deckschicht (A). In einer bevorzugten Ausführungsform der Erfindung ist die Folie dreischichtig aufgebaut und weist auf der einen Seite der Schicht (B) (=Basisschicht) die erfindungsgemäße Deckschicht (A) und auf der anderen Seite der Schicht (B) eine weitere Schicht (C) auf. In diesem Fall bilden die beiden Schichten (A) und (C) die Deckschichten (A) und (C).

Die Basisschicht (B) der Folie enthält bevorzugt mindestens 80 Gew.-% thermoplastischen Polyester, insbesondere mindestens 90 Gew.-% thermoplastischen Polyester, bezogen auf das Gesamtgewicht dieser Schicht. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterephthalat-Homopolymer. Die restlichen Monomereinheiten stammen aus anderen aliphatischen, cycloaliphatischen oder aromatischen Diolen bzw. anderen Dicarbonsäuren. Neben den oben genannten 80 bzw. 90 Gew.-% thermoplastischen Polyester können bis zu 20 Gew.-%, bevorzugt bis zu 10 Gew.-%, beispielsweise an Polybutylenterephthalat (PBT) oder glykolmodifiziertes PET vorhanden sein.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die Herstellung der Polyester kann z.B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Koextrusion auf die Basisschicht (B) aufgebrachte matte Deckschicht (A) ist bevorzugt überwiegend auf Basis von Polyester aufgebaut. Erfindungsgemäß enthält die matte Deckschicht (A) einen Polyester, der bevorzugt 4 bis 30 Mol-% Isophthalsäure, bevorzugt 6 bis 28 Mol-% Isophthalsäure und besonders bevorzugt 8 bis 26 Mol.-%

Isophthalsäure, bezogen auf die Gesamtsäuremenge des Polyesters in dieser Schicht, enthält. Die restlichen Monomereinheiten stammen aus anderen aliphatischen, cycloaliphatischen oder aromatischen Dicarbonsäuren bzw. Diolen, wie sie auch in der Basisschicht vorkommen können und dort bereits beschrieben worden sind. Die für die Basisschicht (B) beschriebenen Polyester sind somit grundsätzlich nach entsprechender Modifikation auch für die Deckschicht (A) geeignet.

Der Rohstoff für die Deckschicht (A) lässt sich beispielsweise über Copolymerisation der einzelnen Monomere oder über Masterbatche verschiedener Einzelpolymere als Mischung bzw. als Blend herstellen.

Erfindungsgemäß enthält die matte Deckschicht (A) einen Copolyester, der aus Terephthalat- und Isophthalat-Einheiten und aus Ethylenglykol-Einheiten aufgebaut ist. Der Anteil an Terephthalat-Einheiten in diesem Copolyester, bezogen auf die Gesamtsäuremenge, beträgt 70 bis 96 Mol-% und der entsprechende Anteil an Isophthalat-Einheiten 30 bis 4 Mol-%. Besonders bevorzugt sind hierunter solche Copolyester, bei denen der Anteil an Terephthalat-Einheiten 72 bis 94 Mol-% und der entsprechende Anteil an Isophthalat-Einheiten 28 bis 6 Mol-% beträgt. Ganz bevorzugt sind solche Copolyester, bei denen der Anteil an Terephthalat-Einheiten 74 bis 92 Mol-% und der entsprechende Anteil an Isophthalat-Einheiten 26 bis 8 Mol-% beträgt.

Falls vorhanden, werden für den restlichen Anteil der in der Deckschicht (A) vorhandenen Polymere prinzipiell die gleichen Polymere verwendet, wie sie zuvor für die Basisschicht (B) beschrieben wurden.

Überraschender Weise hat sich gezeigt, dass man bei Verwendung der zuvor beschriebenen Rohstoffe für die Deckschicht (A) eine Folie mit besonders niedriger Trübung, speziell einer niedrigen Volumentrübung, erhält.

Zur Erzielung der gewünschten Mattheit/des gewünschten Mattgrades enthält die Deckschicht (A) zusätzlich ein Partikelsystem, das durch folgenden Satz von bevorzugten Parametern gekennzeichnet ist:

a) Erfindungsgemäß enthält die matte Deckschicht (A) Partikel (= Antiblockmittel) mit einem Partikeldurchmesser $d_{50}$ von 2,0 bis 10 $\mu$m. Es hat sich als besonders vorteilhaft erwiesen, Teilchen mit einem mittleren Partikeldurchmesser $d_{50}$ von 2,2 bis 9 $\mu$m, bevorzugt von 2,4 bis 8 $\mu$m und besonders bevorzugt von 2,6 bis 7 $\mu$m zu verwenden. Bei der Verwendung von Teilchen mit einem Durchmesser, der unterhalb 2,0 $\mu$m liegt, stellt sich (bei vergleichbaren Konzentrationen) eine erhöhte Trübung ein. Teilchen mit einem Durchmesser größer als 10 $\mu$m verursachen in der Regel Filterprobleme.

b) Erfindungsgemäß enthält die Deckschicht (A) Partikel, deren Durchmesser eine Streuung aufweisen, die durch einen SPAN98 $\leq$ 2,0 beschrieben wird (Definition des SPAN98, siehe Messvorschrift). Bevorzugt ist der SPAN98 $\leq$ 1,9 und besonders bevorzugt ist der SPAN98 $\leq$ 1,8. Enthält die Deckschicht (A) der Folie dagegen ein Partikelsystem, bei dem der SPAN98 des Durchmessers größer als 2,0 ist, so wird der Glanz der Deckschicht (A) höher, was unerwünscht ist.

c) Erfindungsgemäß enthält die Deckschicht (A) Partikel in einer Konzentration von 10000 bis 70000 ppm, bezogen auf das Gesamtgewicht dieser Schicht (10.000 ppm = 1 Gew.-%). Bevorzugt beträgt die Konzentration der Partikel 15000 bis 65000 ppm und besonders bevorzugt 20000 bis 60000 ppm. Enthält die Deckschicht (A) der Folie dagegen ein Partikelsystem, bei dem die Partikel in einer Konzentration von weniger als 10000 ppm vorliegen, so ist sie für eine Anwendung als Mattfolie weniger geeignet. Enthält dagegen die Deckschicht (A) der Folie ein Partikelsystem, bei dem die Partikel in einer Konzentration von mehr als 70000 ppm vorliegen, so wird die Trübung der Folie unter Umständen zu groß.

Typische den Mattgrad der Folie begünstigende und damit bevorzugte Partikelsysteme sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikeln, z.B. Polystyrol- oder Acrylat-Partikel.

Daneben können auch Mischungen von zwei oder mehreren verschiedenen Partikelsystemen oder Mischungen von Partikelsystemen mit gleicher chemischer Zusammensetzung, aber unterschiedlicher Partikelgröße gewählt werden. Die Partikel können den Polymeren der einzelnen Schichten der Folie in den jeweils vorteilhaften Konzentrationen, z.B. als glykolische Dispersion während der Polykondensation oder über Masterbatche bei der Extrusion, zugegeben werden.

Bevorzugte Partikel sind synthetisch hergestellte $SiO_2$-Partikel (in kolloidaler Form). Diese Partikel werden sehr gut in die Polymermatrix eingebunden und erzeugen nur wenig Vakuolen (Hohlräume). Vakuolen entstehen an den Partikel bei der biaxialen Orientierung, verursachen im Allgemeinen Trübung und sind daher für die vorliegende Erfindung wenig geeignet. Zur (synthetischen) Herstellung der $SiO_2$ Partikel (auch Silicagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann es getrocknet und weiterverarbeitet werden. Durch Kontrolle des Waschwasser-pH-Wertes und der Trocknungsbedingungen können die wichtigen physikalischen Parameter wie z.B. Porenvolumen, Porengröße und die Größe der Oberfläche des anfallenden Silikagels variiert werden. Die gewünschte Partikelgröße (z.B. den $d_{50}$-Wert) und Partikelgrößenverteilung (z.B. die SPAN98) erhält man durch geeignete Mahlung des Silikagels (z.B. mechanisch oder hydromechanisch). Hersteller solcher Partikel sind z.B. die Firmen Grace (USA), Fuji (Japan), Degussa (Deutschland) oder Ineos (Großbritannien).

Die matte Deckschicht (A) wird in einer bevorzugten Ausführungsform weiterhin durch den folgenden Satz von Parametern gekennzeichnet:

1) Die Rauigkeit der matten Seite der Folie, ausgedrückt durch ihren $R_a$-Wert, liegt im Bereich von 150 bis 1000 nm, bevorzugt von 175 bis 950 nm, besonders bevorzugt von 200 bis 900 nm. Kleinere Werte als 150 nm haben negative Auswirkungen auf den Mattheitsgrad der Oberfläche, größere Werte als 1000 nm beeinträchtigen die optischen Eigenschaften der Folie.

2) Der Messwert der Oberflächengasströmung liegt im Bereich von 0,1 bis 50 s, bevorzugt im Bereich von 1 bis 45 s. Bei Werten oberhalb von 50 wird der Mattheitsgrad der Folie negativ beeinflusst.

3) Der Reibungskoeffizient (COF) der matten Seite der Folie ist kleiner als 0,5, bevorzugt kleiner als 0,45 und besonders bevorzugt kleiner als 0,4.

In einer weiteren bevorzugten Ausführungsform der Erfindung beträgt die planare Orientierung $\Delta$p der erfindungsgemäßen Folie weniger als 0,170, insbesondere weniger als 0,168 und besonders bevorzugt weniger als 0,166.

Die Basisschicht (B) kann ebenfalls zusätzlich übliche Additive wie beispielsweise Stabilisatoren und/oder Partikel (= Füller) enthalten. Als Stabilisatoren werden vorteilhaft beispielsweise Phosphorverbindungen wie Phosphorsäure oder Phosphorsäureester eingesetzt.

Typische Partikel (Füller) für die Basisschicht (B) sind die für die Deckschicht(en) angegebenen anorganischen und/oder organischen Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

In einer besonders vorteilhaften Ausführungsform enthält die Basisschicht keine oder nur die über das Regenerat eingebrachten Pigmente. Hierdurch wird eine Folie mit ganz besonders niedriger Trübung erhalten.

In der bevorzugten Verwendungsform besteht die Folie aus drei Schichten, der Basisschicht (B) und beidseitig auf dieser Basisschicht aufgebrachten Deckschichten (A) und (C), wobei die Deckschichten (A) und (C) gleich oder verschieden sein können. Die Deckschicht (C) enthält bevorzugt die für die Basisschicht (B) beschriebenen Polymere. Insbesondere enthält die Schicht (C) bevorzugt die oben genannten Füller (Partikel), um das Verarbeitungsverhalten der Folie weiter zu verbessern.

Zwischen der Basisschicht (B) und den Deckschichten (A) und/oder (C) können sich gegebenenfalls noch eine oder mehrere Zwischenschichten befinden. Diese können wiederum aus den für die Basisschicht (B) beschriebenen Polymeren bestehen. In einer besonders bevorzugten Ausführungsform besteht die Zwischenschicht aus dem für die Basisschicht (B) verwendeten Polyester. Die Zwischenschicht kann auch die beschriebenen üblichen Additive enthalten. Die Dicke der Zwischenschicht ist im allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Bei der besonders vorteilhaften dreischichtigen Ausführungsform der erfindungsgemäßen Folie liegt die Dicke der Deckschichten (A) und (C) im allgemeinen im Bereich von 0,1 bis 5,0 $\mu$m, bevorzugt im Bereich von 0,3 bis 4,5 $\mu$m und besonders bevorzugt im Bereich von 0,5 bis 4,0 $\mu$m, wobei die matte Deckschicht (A) und die Deckschicht (C) gleich oder verschieden dick sein können.

Die Gesamtdicke der erfindungsgemäßen Polyesterfolie kann innerhalb weiter Grenzen variieren. Sie liegt in der Regel im Bereich von 3 bis 350 $\mu$m, insbesondere von 4 bis 300 $\mu$m, vorzugsweise von 5 bis 250 $\mu$m, wobei auf die Basisschicht (B) ein Anteil von vorzugsweise 5 bis 97 % an der Gesamtdicke entfällt.

Zusammengefasst zeichnet sich die erfindungsgemäße Folie insbesondere durch einen niedrigen Glanz der Folienoberfläche (A), durch eine vergleichsweise niedrige Trübung und eine hohe Transparenz aus. Außerdem besitzt sie ein gutes Wickel- und Verarbeitungsverhalten.

Der Glanz der Folienoberfläche A ist bevorzugt niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Die Trübung der Folie ist bevorzugt kleiner als 45 %. In einer bevorzugten Ausführungsform beträgt die Trübung der Folie weniger als 40 % und in einer besonders bevorzugten Ausführungsform weniger als 35 %. Die Transparenz der Folie ist bevorzugt größer als 80 %. In einer bevorzugten Ausführungsform beträgt die Transparenz der Folie mehr als 84 % und in einer besonders bevorzugten Ausführungsform mehr als 88 %. Durch die vergleichsweise geringe Trübung und hohe Transparenz der Folie (verglichen mit einer matten Monofolie, siehe Vergleichsbeispiel) kann die erfindungsgemäße Folie z.B. im Konterdruck bedruckt werden, wobei der Druck sehr gut zu erkennen ist.

Die Volumentrübung der Folie ist bevorzugt kleiner als 15 %. In einer bevorzugten Ausführungsform beträgt die Volumentrübung der Folie weniger als 10 % und in einer besonders bevorzugten Ausführungsform weniger als 5 %.

Die Erfindung betrifft auch ein Verfahren zur Herstellung der erfindungsgemäßen Polyesterfolie nach dem aus der Literatur bekannten Koextrusionsverfahren.

Im Rahmen dieses Verfahrens wird so vorgegangen, dass die den einzelnen Schichten (A), (B) und (C) der Folie entsprechenden Schmelzen durch eine Flachdüse koextrudiert und zu Schmelzefilmen ausgeformt werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst werden, wie beim Koextrusionsverfahren üblich, das Polymere bzw. die Polymermischungen für die einzelnen Schichten in je einem Extruder komprimiert und verflüssigt, wobei die gegebenenfalls als Zusätze vorgesehenen Additive bereits im Polymer bzw. in der Polymermischung enthalten sein können. Bevorzugt werden diese Additive in Form von Masterbatches dem Ausgangspolymer zugesetzt. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung = MD-Richtung) und anschließend in Querrichtung (d.h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in den die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberflächen der Folie nach den bekannten Verfahren in-line beschichten. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens der Folie dienen.

Für die Herstellung einer Folie mit einem sehr hohen Mattgrad (= sehr niedrigem Glanz) und einer verbesserten Transparenz hat es sich als besonders günstig erwiesen, wenn die planare Orientierung $\Delta p$ der Folie kleiner ist als $\Delta p = 0,170$, bevorzugt kleiner ist als $\Delta p = 0,168$ und ganz bevorzugt kleiner ist als $\Delta p = 0,166$. Die kleinere planare Orientierung $\Delta p$ hat zur Folge, dass

die Tendenz zur Bildung von Vakuolen um die Partikel herum geringer und

die Rauigkeiten der Oberflächen größer werden.

Es hat sich herausgestellt, dass die wesentlichen Einflussgrößen auf die planare Orientierung $\Delta p$ die Verfahrensparameter in der Längsstreckung und in der Querstreckung sowie der SV-Wert des verwendeten Rohstoffes sind. Zu den Verfahrensparametern gehören insbesondere die Streckverhältnisse in Längs- und in Querrichtung ($\lambda_{MD}$ und $\lambda_{TD}$) sowie die Strecktemperaturen in Längs- und in Querrichtung ($T_{MD}$ und $T_{TD}$). Erhält man beispielsweise mit einer Maschine eine planare Orientierung der Folie von $\Delta p = 0,171$ mit dem Parametersatz $\lambda_{MD} = 4,8$ und $\lambda_{TD} = 4,0$, $T_{MD} = 80$ bis 118 °C und $T_{TD} = 80$ bis 125 °C, so erhält man durch Erhöhung der Längsstrecktemperatur auf $T_{MD} = 80$ bis 125 °C oder durch Erhöhung der Querstrecktemperatur auf $T_{TD} = 80$ bis 135 °C oder durch Absenkung des Längstreckverhältnisses auf $\lambda_{MD} = 4,3$ oder durch Absenkung des Querstreckverhältnisses auf $\lambda_{TD} = 3,7$ eine planare Orientierung $\Delta p$, die im gewünschten Bereich liegt. Die angegeben Temperaturen beziehen sich bei der Längsstreckung auf die jeweiligen Walzentemperaturen und bei der Querstreckung auf die Folientemperaturen, die mittels IR gemessen werden.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Bevorzugt werden nach der biaxialen Streckung eine oder beide Oberflächen der Folie nach einer der bekannten Methoden corona- oder flammbehandelt. Die Behandlungsintensität wird bevorzugt so eingestellt, dass die daraus resultierende Oberflächenspannung im Bereich von über 45 mN/m liegt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzlichen Schichten über In-line-Beschichtung bevorzugt mittels wässriger Dispersionen vor dem Streckschritt in Querrichtung auf die Folie aufzubringen.

Die erfindungsgemäße Folie zeichnet sich insbesondere durch hervorragende optische Eigenschaften, d.h. einen niedrigen Glanz und eine hohe Transparenz, ein sehr gutes Handling und durch ein sehr gutes Verarbeitungsverhalten aus.

Daneben ist bei der Herstellung der Folie gewährleistet, dass Verschnittmaterial, das bei der Herstellung der Folie in größeren Mengen anfällt, als Regenerat in einer Menge im Bereich von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in der flexiblen Verpackung, und zwar insbesondere dort, wo ihre hervorragenden optischen Eigenschaften und ihre gute Verarbeitbarkeit voll zum Tragen kommen wie z. B. beim Einsatz auf schnelllaufenden Verpackungsmaschinen.

Die nachstehende Tabelle (Tabelle 1) fasst die wichtigsten erfindungsgemäßen und bevorzugten Folieneigenschaften noch einmal zusammen.

**Tabelle 1**

| | erfindungsgemäßer Bereich | bevorzugt | besonders bevorzugt | Einheit | Messmethode |
|---|---|---|---|---|---|
| **Deckschicht A** | | | | | |
| Dicke der Deckschicht | > 0,1 | 0,3 bis 4,5 | 0,5 bis 4 | µm | |
| Partikeldurchmesser $d_{50}$ | 2,0 bis 10 | 2,2 bis 9 | 2,4 bis 8 | µm | wie beschrieben |
| Streuung SPAN 98 | $\leq 2,0$ | $\leq 1,9$ | $\leq 1,8$ | - | wie beschrieben |
| Füllstoffkonzentration | 10000 bis 70000 | 15000 bis 65000 | 20000 bis 60000 | ppm | |
| Isophthalatgehalt des Polymers | 4 bis 30 | 6 bis 28 | 8 bis 26 | Mol.-% | |
| Mittlere Rauhigkeit $R_a$ | 150 bis 1000 | 175 bis 950 | 200 bis 900 | nm | DIN 4768, Cut-off von 0,25 mm |
| COF A/A | < 0,5 | < 0,45 | < 0,40 | | DIN 53375 |
| Glanz, 60° Einstrahlwinkel | < 70 | < 60 | < 50 | | DIN 67530 |
| Messwertbereich für die Oberflächen-Gasströmung | 1 bis 50 | 1 bis 45 | 1 bis 40 | sec | wie beschrieben |
| **Folieneigenschaften** | | | | | |
| Trübung | < 45 | < 40 | < 35 | % | ASTM D 1003-52 |
| Transparenz | > 80 | > 84 | > 88 | | wie beschrieben |
| Volumentrübung | < 15 | <10 | < 5 | % | wie beschrieben |
| Planare Orientierung $\Delta p$ | < 0,170 | < 0,168 | < 0,166 | - | wie beschrieben |

Zur Charakterisierung der Rohstoffe und der Folien wurden die folgenden Messmethoden benutzt:

DIN = Deutsches Institut für Normung
ASTM = American Society for Testing and Materials

SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6,907 \cdot 10^{-4}\ SV\ (DCE) + 0,063096$$

Oberflächenspannung

Die Oberflächenspannung wurde mittels der so genannten Tintenmethode (DIN 53 364) bestimmt.

Trübung

Die Trübung nach Hölz wurde in Anlehnung an ASTM-D 1003-52 bestimmt, wobei jedoch anstelle einer 4°-Lochblende eine 1 °-Spaltblende eingesetzt wurde.

Volumentrübung

Für die Messung der Volumentrübung wird eine Folienprobe in einen Rahmen eingespannt, der in eine Küvette mit Immersionsflüssigkeit getaucht wird. Die Folienprobe muss von beiden Seiten vollständig mit Flüssigkeit benetzt sein. Die Immersionsflüssigkeit sollte einen Brechungsindex zwischen 1,50 und 1,65 aufweisen, verwendet wurde z.B. ein Immersionsöl der Firma Merck, Deutschland (Nr. 104699) mit einem Brechungsindex von 1,516. Die Küvette mit der Folienprobe wird in den Strahlengang eines Trübungsmessgeräts gebracht. Der Trübungswert wird gemessen und davon der Wert der flüssigkeitsgefüllten Küvette ohne Folienprobe als Nullwert abgezogen. Der resultierende Wert ist gleich dem Volumentrübungswert.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Oberflächengasströmungszeit

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezipienten einen Druckanstieg von 56 mbar zu bewirken.

Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |

(fortgesetzt)

| Druckintervall | 56 mbar |
|---|---|

Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z.B. Glas) berührt.

Planare Orientierung $\Delta p$

Die Bestimmung der planaren Orientierung erfolgt über die Messung der Brechungsindizes mit einem Abbe-Refraktometer der Firma Kruss Optronic, Deutschland. Die planare Orientierung wird dabei stets an der höher glänzenden Seite der Folie gemessen. Die Bestimmung der Brechungsindizes ist bereits ausführlich z. B. in der EP-A-0 952 176, Seite 10, wiedergegeben worden. Es wird daher hier ausdrücklich auf diese Schrift Bezug genommen. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

Messung des mittleren Durchmessers $d_{50}$ (mittlerer Partikeldurchmesser)

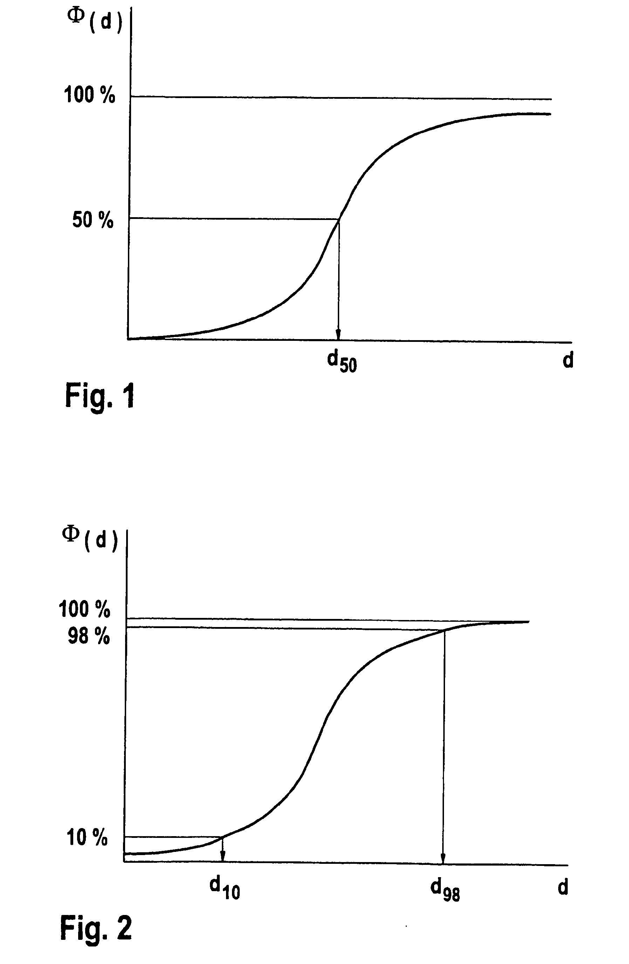

Die Bestimmung des mittleren Durchmessers $d_{50}$ wurde auf einem Master Sizer der Firma Malvern Instruments, Großbritannien, mittels Laserscannung durchgeführt [andere Messgeräte sind z.B. Horiba LA 500 (Horiba Europe GmbH, Deutschland) oder Helos (Sympathec, Deutschland), welche das gleiche Messprinzip verwenden)]. Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$ Wert [auch Median genannt, vgl. Figur 1, $\Phi(d)$ = (relative) Summe der Partikel].

Messung der SPAN98

Die Bestimmung des Streumaßes, der SPAN98, wurde mit dem gleichen Messgerät durchgeführt wie oben bei der Bestimmung des mittleren Durchmessers $d_{50}$ beschrieben. Der SPAN98 ist dabei wie folgt definiert:

$$SPAN\,98 = \frac{d_{98} - d_{10}}{d_{50}}$$

Der Ermittlung von $d_{98}$ und $d_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten $d_{98}$-Wert, und der Schnittpunkt des 10 % Ordinatenwertes der Summenkurve mit der Kurve liefert auf der Abszissenachse den gewünschten $d_{10}$-Wert (vgl. Figur 2). Die Transparenz wurde mit einem Haze TC der Firma Pausch Messtechnik, Deutschland, oder Hazegard-plus der Firma Byk-Gardner, USA, nach ASTM D 1003-61 gemessen.

Im Folgenden wird die Erfindung an Hand von Beispielen näher erläutert.

Beispiel 1

Chips aus Polyethylenterephthalat (hergestellt über das Umesterungsverfahren mit Mn als Umesterungskatalysator, Mn-Konzentration im Polymer: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und einem Füllstoff dem Extruder für die nicht matte Deckschicht (C) zugeführt. Daneben wurden Chips aus einem Polyethylenterephthalat (hergestellt über das Umesterungsverfahren mit Mn als Umesterungskatalysator, Mn-Konzentration: 100 ppm) bei einer Temperatur von 150 °C auf eine Restfeuchte von unterhalb 100 ppm getrocknet und zusammen mit dem Füllstoff dem Extruder für die matte Deckschicht (A) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 μm hergestellt. Die Dicke der Deckschichten betrug jeweils 1,2 μm.

Deckschicht (A):

| | |
|---|---|
| 100 Gew.-% | Polyesterrohstoff, bestehend aus 97 Gew.-% Copolyester (aus 90 Mol-% Terephthalsäure, 10 Mol-% Isophthalsäure und 100 Mol% Ethylenglykol) und 3,0 Gew.-% Kieselsäurepartikel (Sylysia® 430 von der Fa. Fuji/Japan) mit einem $d_{50}$-Wert von 3,4 μm und einer SPAN 98 von 1,6 |

Basisschicht (B):

| | |
|---|---|
| 100 Gew.-% | Polyethylenterephthalat 4023 der Fa. KoSa, Deutschland, mit einem SV-Wert von 800 |

Deckschicht (C), Mischung aus:

| | |
|---|---|
| 93,0 Gew.-% | Polyethylenterephthalat 4023 der Fa. KoSa, Deutschland, mit einem SV-Wert von 800 |
| 7,0 Gew.-% | Masterbatch aus 97,75 Gew.-% Polyethylenterephthalat, 1,0 Gew.-% Sylobloc® 44 H (synthetisches $SiO_2$ der Fa. Grace, USA) und |
| 1,25 Gew.-% | Aerosil® TT 600 (pyrogenes $SiO_2$ der Fa. Degussa, Deutschland) |

Die Herstellungsbedingungen in den einzelnen Verfahrensschritten waren:

| | | | | |
|---|---|---|---|---|
| Extrusion: | Temperaturen | A-Schicht: | 290 | °C |
| | | B-Schicht: | 290 | °C |
| | | C-Schicht: | 290 | °C |
| | Temperatur der Abzugswalze | | 25 | °C |
| Längsstreckung: | Strecktemperatur: | | 125 | °C |
| | Längsstreckverhältnis: | | 4,1 | |
| Querstreckung: | Strecktemperatur: | | 130 | °C |
| | Querstreckverhältnis | | 3,9 | |
| | Temperatur: | | 230 | °C |
| Fixierung: | Dauer: | | 3 | s |

Die Folie hatte den geforderten niedrigen Glanz, die geforderte niedrige Trübung, die geforderte niedrige Volumentrübung und die geforderte hohe Transparenz. Weiterhin konnte die Folie sehr gut, d.h. abrissfrei, hergestellt werden und zeigte außerdem das gewünschte Verarbeitungsverhalten. Der Folienaufbau und die erzielten Eigenschaften der in den Beispielen hergestellten Folien sind in den Tabellen 2 und 3 dargestellt.

Beispiel 2

Analog zu Beispiel 1 wurde durch Koextrusion eine dreischichtige Folie mit einer Gesamtdicke von 12 $\mu$m hergestellt. Es wurde nur die Zusammensetzung der Deckschicht A geändert:

Deckschicht (A):

| 100 Gew.-% | Polyesterrohstoff, bestehend aus 95,5 Gew.-% Copolyester (aus 90 Mol-% Terephthalsäure, 10 Mol-% Isophthalsäure und 100 Mol-% Ethylenglykol) und 4,5 Gew.-% Kieselsäurepartikel (Sylysia$^{®}$ 430 von der Fa. Fuji/Japan) mit einem $d_{50}$-Wert von 3,4 $\mu$m und einer SPAN 98 von 1,6 |
|---|---|

Der Glanz war im Vergleich zu Beispiel 1 deutlich verringert.

Beispiel 3

Gegenüber Beispiel 1 wurde nur die Rezeptur der Deckschicht A geändert:

Deckschicht (A):

| 100 Gew.-% | Polyesterrohstoff, bestehend aus 95,5 Gew.-% Copolyester (aus 80 Mol-% Terephthalsäure, 20 Mol-% Isophthalsäure und 100 Mol-% Ethylenglykol) und 4,5 Gew.-% Kieselsäurepartikel (Sylysia$^{®}$ 430 von der Fa. Fuji/Japan) mit einem $d_{50}$-Wert von 3,4 $\mu$m und einer SPAN 98 von 1,6 |
|---|---|

Im Vergleich zu Beispiel 2 hat sich bei nahezu gleichbleibendem Glanz die Trübung deutlich verringert und die Transparenz erhöht.

Beispiel 4

Gegenüber Beispiel 3 wurde die Dicke der Deckschicht A auf 1,8 $\mu$m erhöht. Dadurch konnte der Glanz verringert werden ohne signifikante Veränderung der Trübung und der Transparenz.

Beispiel 5

Gegenüber Beispiel 4 wurde die Gesamtdicke der Folie auf 23 $\mu$m erhöht. Die Trübung und Transparenz dieser Folie sind nur geringfügig schlechter als die der 12 $\mu$m dicken Folie.

Beispiel 6

Gegenüber Beispiel 1 wurde nur die Rezeptur der Deckschicht A geändert:

Deckschicht (A):

| 85 Gew.-% | Copolyester (aus 78 Mol-% Terephthalsäure, 22 Mol-% Isophthalsäure und 100 Mol-% Ethylenglykol) und 5 Gew.-% Kieselsäurepartikel (Sylysia$^{®}$ 430 von der Fa. Fuji/Japan) mit einem $d_{50}$-Wert von 3,4 $\mu$m und einer SPAN 98 von 1,6 |
|---|---|
| 15 Gew.-% | Polyethylenterephthalat 4023 der Fa. KoSa, Deutschland mit einem SV-Wert von 800 |

Vergleichsbeispiel 1 (VB1)

Im Vergleich zu Beispiel 1 wurde jetzt die Folie mit folgender Rezeptur der Deckschicht (A) hergestellt:

Deckschicht (A):

100 Gew.-%     Polyesterrohstoff, bestehend aus 98 Gew.-% Polyethylenterephthalat und 2,0 Gew.-% Kieselsäurepartikel mit einem $d_{50}$-Wert von 3,4 $\mu$m

Der Mattgrad der Folie, die Trübung und die Transparenz der Folie und die Herstellbarkeit sind deutlich schlechter geworden.

Tabellen 2 und 3 zeigen eine Zusammenfassung der Versuchsergebnisse:

**Tabelle 2**

| Beispiel | Foliendicke in μm | Folienaufbau | Schichtdicken in μm | | | Partikel in den Schichten | | | d$_{50}$-Wert der Partikel in den Schichten in μm | | Pigmentkonzentrationen in ppm | | | Isophthalat-Gehalt der Schicht A |
|---|---|---|---|---|---|---|---|---|---|---|---|---|---|---|
| | | | A | B | C | A | B | C | A | C | A | C | | in Mol.-% |
| B 1 | 12 | ABC | 1,2 | 9,6 | 1,2 | Sylysia 430 | kein | Sylobloc 44 H Aerosil TT 600 | 3,4 | 2,5 | 0,04 | 30000 | 700 | 875 | 10 |
| B 2 | 12 | ABC | 1,2 | 9,6 | 1,2 | Sylysia 430 | kein | Sylobloc 44 H Aerosil TT 600 | 3,4 | 2,5 | 0,04 | 45000 | 700 | 875 | 10 |
| B 3 | 12 | ABC | 1,2 | 9,6 | 1,2 | Sylysia 430 | kein | Sylobloc 44 H Aerosil TT 600 | 3,4 | 2,5 | 0,04 | 45000 | 700 | 875 | 20 |
| B 4 | 12 | ABC | 1,8 | 9,0 | 1,2 | Sylysia 430 | kein | Sylobloc 44 H Aerosil TT 600 | 3,4 | 2,5 | 0,04 | 45000 | 700 | 875 | 20 |
| B 5 | 23 | ABC | 1,8 | 20,0 | 1,2 | Sylysia 430 | kein | Sylobloc 44 H Aerosil TT 600 | 3,4 | 2,5 | 0,04 | 45000 | 700 | 875 | 20 |
| B 6 | 12 | ABC | 1,2 | 9,6 | 1,2 | Sylysia 430 | kein | Sylobloc 44 H Aerosil TT 600 | 3,4 | 2,5 | 0,04 | 42500 | 700 | 875 | 18,7 |
| | | | | | | | | | | | | | | | |
| VB 1 | 12 | ABC | 1,2 | 9,6 | 1,2 | Sylysia 430 | kein | Sylobloc 44 H Aerosil TT 600 | 3,4 | 2,5 | 0,04 | 20000 | 700 | 875 | 0 |

**Tabelle 3**

| Beispiel | Mittlere Rauigkeit $R_a$ | | Messwerte für die Gasströmung | | Planare Orientierung $\Delta p$ | Glanz 60° | Glanz 20° | Trübung (%) | Volumentrübung (%) | Transparenz (%) | Herstellverhalten |
|---|---|---|---|---|---|---|---|---|---|---|---|
| | A-Seite | C-Seite | A-Seite | C-Seite | | A-Seite | C-Seite | | | | |
| B 1 | 280 | 60 | 10 | 130 | 0,165 | 55 | 145 | 35 | 5,2 | 88 | ++ |
| B 2 | 320 | 60 | 9 | 130 | 0,165 | 44 | 140 | 38 | 8,1 | 86 | ++ |
| B 3 | 320 | 60 | 8 | 130 | 0,165 | 46 | 141 | 32 | 1,8 | 89 | ++ |
| B 4 | 320 | 60 | 8 | 130 | 0,165 | 42 | 138 | 34 | 2,0 | 87 | ++ |
| B 5 | 320 | 60 | 8 | 130 | 0,165 | 42 | 139 | 36 | 2,7 | 85 | ++ |
| B 6 | 320 | 60 | 7 | 130 | 0,165 | 42 | 139 | 36 | 2,7 | 85 | ++ |
| VB 1 | 210 | 60 | 15 | 130 | 0,165 | 70 | 160 | 62 | 26,5 | 79 | - |

Zeichenerklärung für das Herstellverhalten der Folien:

++: keine Abrisse, niedrige Herstellkosten

-: häufige Abrisse, hohe Herstellkosten der Folie

**Patentansprüche**

1. Polyesterfolie, die mindestens eine Basisschicht (B) und mindestens eine matte Deckschicht (A) aufweist, **dadurch gekennzeichnet, dass** die Deckschicht (A) Partikel enthält, die einen mittleren Partikeldurchmesser $d_{50}$ von 2 bis 10 $\mu$m und eine SPAN98 von kleiner/gleich 2 aufweisen, und **dass** die Deckschicht (A) einen Polyester enthält, der 4 bis 30 Mol-% Isophthalsäureeinheiten aufweist und 70 bis 96 Mol-% Terephthalsäureeinheiten, bezogen auf die Gesamtsäuremenge des Polyesters in dieser Schicht.

2. Polyesterfolie nach Anspruch 1, **dadurch gekennzeichnet, dass** die Partikelkonzentration in der Deckschicht (A) 10.000 bis 70.000 ppm beträgt, bezogen auf das Gesamtgewicht dieser Schicht.

3. Polyesterfolie nach Anspruch 1 oder 2, **dadurch gekennzeichnet, dass** der Partikeldurchmesser $d_{50}$ 2,2 bis 9 $\mu$m, bevorzugt 2,4 bis 8 $\mu$m, beträgt.

4. Polyesterfolie nach einem oder mehreren der Ansprüche 1 bis 3, **dadurch gekennzeichnet, dass** der in der Deckschicht (A) enthaltene Polyester 6 bis 28 Mol-%, bevorzugt 8 bis 26 Mol-%, Isophthalsäureeinheiten enthält.

5. Polyesterfolie nach einem oder mehreren der Ansprüche 1 bis 4, **dadurch gekennzeichnet, dass** die in der Deckschicht (A) enthaltenen Partikel eine SPAN98 von kleiner/gleich 1,9, bevorzugt von kleiner/gleich 1,8, aufweisen.

6. Polyesterfolie nach einem oder mehreren der Ansprüche 1 bis 5, **dadurch gekennzeichnet, dass** es sich bei den in der Deckschicht (A) enthaltenen Partikeln um organische und/oder anorganische Partikel, bevorzugt um $SiO_2$, handelt.

7. Polyesterfolie nach einem oder mehreren der Ansprüche 1 bis 6, **dadurch gekennzeichnet, dass** der in der Deckschicht (A) enthaltene Polyester ein Copolyester ist, der Terephthalat-, Isophthalat- und Ethylenglykol-Einheiten enthält.

8. Polyesterfolie nach einem oder mehreren der Ansprüche 1 bis 7, **dadurch gekennzeichnet, dass** die Basisschicht (B) zu mindestens 80 Gew.-%, bevorzugt zu mindestens 90 Gew.-%, aus einem thermoplastischen Polyester besteht.

9. Polyesterfolie nach einem oder mehreren der Ansprüche 1 bis 8, **dadurch gekennzeichnet, dass** der thermoplastische Polyester der Basisschicht (B) Terephthalsäure- und Ethylenglykol-Einheiten und/oder Naphthalin-2,6-dicarbonsäure- und Ethylenglykol-Einheiten enthält.

10. Polyesterfolie nach einem oder mehreren der Ansprüche 1 bis 9, **dadurch gekennzeichnet, dass** als thermoplastischer Polyester für die Basisschicht (B) Polyethylenterephthalat verwendet wird.

11. Polyesterfolie nach einem oder mehreren der Ansprüche 1 bis 10, **dadurch gekennzeichnet, dass** die Basisschicht (B) keine externen Partikel enthält.

12. Polyesterfolie nach einem oder mehreren der Ansprüche 1 bis 11, **dadurch gekennzeichnet, dass** die Folie einen ABC-Schichtaufbau aufweist, wobei (A) und (C) die Deckschichten darstellen, die gleich oder verschieden sind.

13. Polyesterfolie nach einem oder mehreren der Ansprüche 1 bis 12, **dadurch gekennzeichnet, dass** die Folie eine planare Orientierung $\Delta p$ von kleiner/gleich 0,170 aufweist.

14. Polyesterfolie nach einem oder mehreren der Ansprüche 1 bis 13, **dadurch gekennzeichnet, dass** die Folie eine Trübung von kleiner als 45 % aufweist.

15. Polyesterfolie nach einem oder mehreren der Ansprüche 1 bis 14, **dadurch gekennzeichnet, dass** die Folie eine Volumentrübung von kleiner als 15 % aufweist.

16. Polyesterfolie nach einem oder mehreren der Ansprüche 1 bis 15, **dadurch gekennzeichnet, dass** die Folie eine Transparenz von größer als 80 % aufweist.

17. Polyesterfolie nach einem oder mehreren der Ansprüche 1 bis 16, **dadurch gekennzeichnet, dass** die matte Deckschicht (A) einen Glanz von kleiner als 70 aufweist.

18. Verfahren zur Herstellung einer Polyesterfolie nach einem oder mehreren der Ansprüche 1 bis 17 umfassend die Schritte:

   a) Herstellen einer mehrschichtigen Folie durch Koextrusion und Ausformen der Schmelzen zu flachen Schmelzefilmen,
   b) biaxiales Strecken der Folie und
   c) Thermofixieren der gestreckten Folie.

19. Verwendung einer Polyesterfolie nach einem oder mehreren der Ansprüche 1 bis 17 als flexible Verpackungsfolie, insbesondere für Nahrungs- und Genussmittel.

20. Verwendung einer Polyesterfolie nach Anspruch 19, **dadurch gekennzeichnet, dass** der Verpackungsvorgang auf schnelllaufenden Verpackungsmaschinen erfolgt.

**Claims**

1. A polyester film which has at least one base layer (B) and has at least one matt overlayer (A), wherein the overlayer (A) comprises particles which have a median particle diameter $d_{50}$ of from 2 to 10 $\mu$m and have a SPAN98 smaller than or equal to 2, and wherein the overlayer (A) comprises a polyester which has from 4 to 30 mol % of isophthalic acid units and from 70 to 96 mol % of terephthalic acid units, based on the total amount of acid in the polyester in this layer.

2. The polyester film as claimed in claim 1, wherein the particle concentration in the overlayer (A) is from 10000 to 70000 ppm, based on the total weight of this layer.

3. The polyester film as claimed in claim 1 or 2, wherein the particle diameter $d_{50}$ is from 2.2 to 9 $\mu$m, preferably from 2.4 to 8 $\mu$m.

4. The polyester film as claimed in one or more of claims 1 to 3, wherein the polyester present in the overlayer (A) contains from 6 to 28 mol %, preferably from 8 to 26 mol %, of isophthalic acid units.

5. The polyester film as claimed in one or more of claims 1 to 4, wherein the particles present in the overlayer (A) have a SPAN98 smaller than or equal to 1.9, preferably smaller than or equal to 1.8.

6. The polyester film as claimed in one or more of claims 1 to 5, wherein the particles present in the overlayer (A) are organic and/or inorganic particles, preferably $SiO_2$.

7. The polyester film as claimed in one or more of claims 1 to 6, wherein the polyester present in the overlayer (A) is a copolyester which comprises terephthalate units, isophthalate units, and ethylene glycol units.

8. The polyester film as claimed in one or more of claims 1 to 7, wherein the base layer (B) is composed of at least 80 % by weight, preferably at least 90 % by weight, of a thermoplastic polyester.

9. The polyester film as claimed in one or more of claims 1 to 8, wherein the thermoplastic polyester of the base layer (B) contains terephthalic acid units and ethylene glycol units, and/or naphthalene-2,6-dicarboxylic acid units and ethylene glycol units.

10. The polyester film as claimed in one or more of claims 1 to 9, wherein polyethylene terephthalate is used as thermoplastic polyester for the base layer (B).

11. The polyester film as claimed in one or more of claims 1 to 10, wherein no external particles are present in the base layer (B).

12. The polyester film as claimed in one or more of claims 1 to 11, which has an ABC layer structure, (A) and (C) being the overlayers, which are identical or different.

13. The polyester film as claimed in one or more of claims 1 to 12, which has a planar orientation $\Delta$p smaller than or

equal to 0.170.

**14.** The polyester film as claimed in one or more of claims 1 to 13, which has a haze smaller than 45 %.

**15.** The polyester film as claimed in one or more of claims 1 to 14, which has a volume haze smaller than 15 %.

**16.** The polyester film as claimed in one or more of claims 1 to 15, which has a transparency greater than 80 %.

**17.** The polyester film as claimed in one or more of claims 1 to 16, wherein the matt overlayer (A) has a gloss smaller than 70.

**18.** A process for producing a polyester film as claimed in one or more of claims 1 to 17, encompassing the steps of:

a) production of a multilayer film by coextrusion and shaping of the melts to give flat melt films,
b) biaxial stretching of the film, and
c) heat-setting of the stretched film.

**19.** The use of a polyester film as claimed in one or more of claims 1 to 17 as a flexible packaging film, in particular for food or other consumable items.

**20.** The use of a polyester film as claimed in claim 19, wherein the packaging procedure takes place on highspeed packaging machinery.

**Revendications**

**1.** Film de polyester, comportant au moins une couche de base (B) et au moins une couche de recouvrement (A) mate, **caractérisé en ce que** la couche de recouvrement (A) contient des particules qui ont un diamètre moyen de particule $d_{50}$ de 2 à 10 $\mu$m et une valeur SPAN98 inférieure ou égale à 2, et **en ce que** la couche de recouvrement (A) contient un polyester qui comporte de 4 à 30 % en moles de motifs acide isophtalique et de 70 à 96 % en moles de motifs acide téréphtalique,
par rapport à la quantité totale d'acides du polyester dans cette couche.

**2.** Film de polyester selon la revendication 1, **caractérisé en ce que** la concentration de particules dans la couche de recouvrement (A) va de 10 000 à 70 000 ppm, par rapport au poids total de cette couche.

**3.** Film de polyester selon la revendication 1 ou 2, **caractérisé en ce que** le diamètre de particule $d_{50}$ va de 2,2 à 9 $\mu$m, de préférence de 2,4 à 8 $\mu$m.

**4.** Film de polyester selon une ou plusieurs des revendications 1 à 3, **caractérisé en ce que** le polyester contenu dans la couche de recouvrement (A) contient de 6 à 28 % en moles, de préférence de 8 à 26 % en moles, de motifs acide isophtalique.

**5.** Film de polyester selon une ou plusieurs des revendications 1 à 4, **caractérisé en ce que** les particules contenues dans la couche de recouvrement (A) ont une valeur SPAN98 inférieure ou égale à 1,9, de préférence inférieure ou égale à 1,8.

**6.** Film de polyester selon une ou plusieurs des revendications 1 à 5, **caractérisé en ce que** les particules contenues dans la couche de recouvrement (A) sont des particules organiques et/ou inorganiques, de préférence de $SiO_2$.

**7.** Film de polyester selon une ou plusieurs des revendications 1 à 6, **caractérisé en ce que** le polyester contenu dans la couche de recouvrement (A) est un copolyester qui contient des motifs téréphtalate, isophtalate et éthylèneglycol.

**8.** Film de polyester selon une ou plusieurs des revendications 1 à 7, **caractérisé en ce que** la couche de base (B) consiste à raison d'au moins 80 % en poids, de préférence à raison d'au moins 90 % en poids, en un polyester thermoplastique.

**9.** Film de polyester selon une ou plusieurs des revendications 1 à 8, **caractérisé en ce que** le polyester thermoplastique de la couche de base (B) contient des motifs acide téréphtalique et éthylèneglycol et/ou acide naphtalène-2,6-dicarboxylique et éthylèneglycol.

**10.** Film de polyester selon une ou plusieurs des revendications 1 à 9, **caractérisé en ce qu'**on utilise du poly(éthylène-téréphtalate)comme polyester thermoplastique pour la couche de base (B).

**11.** Film de polyester selon une ou plusieurs des revendications 1 à 10, **caractérisé en ce que** la couche de base (B) ne contient pas de particules externes.

**12.** Film de polyester selon une ou plusieurs des revendications 1 à 11, **caractérisé en ce que** le film présente une structure de couches ABC, (A) et (C) représentant les couches de recouvrement, qui sont identiques ou différentes.

**13.** Film de polyester selon une ou plusieurs des revendications 1 à 12, **caractérisé en ce que** le film présente une orientation planaire $\Delta$p inférieure ou égale à 0,170.

**14.** Film de polyester selon une ou plusieurs des revendications 1 à 13, **caractérisé en ce que** le film présente une opacité de moins de 45 %.

**15.** Film de polyester selon une ou plusieurs des revendications 1 à 14, **caractérisé en ce que** le film présente une opacité volumique de moins de 15 %.

**16.** Film de polyester selon une ou plusieurs des revendications 1 à 15, **caractérisé en ce que** le film présente une transparence de plus de 80 %.

**17.** Film de polyester selon une ou plusieurs des revendications 1 à 16, **caractérisé en ce que** la couche de recouvrement (A) mate a un brillant inférieur à 70.

**18.** Procédé pour la fabrication d'un film de polyester selon une ou plusieurs des revendications 1 à 17, comprenant les étapes suivantes :

a) production d'un film multicouche par coextrusion et à la sortie mise des masses fondues en forme de films plats,
b) étirage biaxial du film et
c) thermofixation du film étiré.

**19.** Utilisation d'un film de polyester selon une ou plusieurs des revendications 1 à 17, en tant que matériau d'emballage flexible, en particulier pour produits alimentaires et autres produits de consommation.

**20.** Utilisation d'un film de polyester selon la revendication 19, **caractérisée en ce que** le processus d'emballage s'effectue sur des machines d'emballage à grande vitesse.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0347646 A
- EP 0053498 A
- DE 2353347 A

- US 3154461 A
- EP 1197328 A
- EP 0952176 A